# EUROPEAN PATENT SPECIFICATION

(11) **EP 3 680 156 B1**
(45) Date of publication and mention of the grant of the patent: **28.07.2021**
(21) Application number: 19151724.2
(22) Date of filing: 14.01.2019
(51) Int. Cl.: G10K 1/072, G10K 1/071, G10K 1/06, B62J 3/04

(54) **BICYCLE BELL**
FAHRRADKLINGEL
SONNETTE DE BICYCLETTE

(43) Date of publication of application: 15.07.2020
(73) Proprietor: Nuvo Enterprise Co., Ltd., Changhua Hsien (TW)
(72) Inventor: Shih, Ho-Jen, FUHSING HSIANG, CHANGHUA HSIEN (TW)
(74) Representative: Lang, Christian

(56) References cited:
- CN-U- 207 360 466
- DE-U1-202012 000 833
- FR-A1- 3 063 064
- US-B1- 9 633 643

## Description

### Field of the Invention

The present invention relates to a bicycle bell, especially to a bicycle bell cable of producing a sound for warning pedestrians and other cyclists.

### Description of Related Art

A conventional bicycle bell is provided with a bell seat on which a bell housing is mounted and under which a collar is arranged. The bicycle bell is fastened on a handlebar of a bicycle by means of the collar. Furthermore, a connecting portion is protruding from a side of the bell seat. A clapper is articulated with the upper side of the connecting portion through a elastic element. To use the bell, the clapper is pulled and thereby brought to strike the bell housing by the resetting elastic force of the elastic element. Thus the bell produces a warning sound.

The said bicycle bell consisting of a bell housing and a clapper is known. People are used to the operation of this kind of bicycle bells. However, people are always interested in known products of new styles and visually surprising variations.

Document CN207360466U, which discloses all the features of the preamble of independent claim 1, discloses such a known bicycle bell.

### SUMMARY OF THE INVENTION

Therefore it is a primary object of the present invention to provide a bicycle bell whose struck block is shaped in a simple style and can produce a clear, melodious and loud warning sound, whereas the new stylish shape of the bicycle bell differs from the shape of the conventional bicycle bells with a bell housing, so that the bicycle bell is visually and acoustically new to the consumers and therefore competitive in the market.

In order to achieve the above object, a bicycle bell according to the present invention consists of a fixing element, a struck block and a striking element. The fixing element is provided with a base on whose bottom side a connecting portion is arranged, so that the fixing element can be easily mounted on a handlebar of a bicycle by means of the connecting portion. A positioning column which is protruding from the center of the top side of the base is arranged to elevate the struck block and the struck block can be connected to the positioning column. Furthermore, an extending seat is formed on one side of the base, so that the striking element which is elastic and resettable can be mounted on the extending seat. The struck block is made of metal and formed as a triangular body having a hollow space inwardly. The struck block is provided with three struck segments surrounding the outer side of the hollow space and connected with each other in such a manner that the respective connecting part is formed as a turn. A cantilever is extending from at least one of the struck segments into the hollow space in such a way that the struck block is mounted on the positioning column of the fixing element by the cantilever. An opening is arranged on one side of the struck block in such a manner that the opening goes through the said struck segment.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein:
Fig. 1 is a perspective view of a bicycle bell according to the present invention in the built-on state;
Fig. 2 is an explosive view of a bicycle bell according to the present invention;
Fig. 3 is a sectional view of a bicycle bell according to the present invention in the built-on state;
Fig. 4 is a sectional view of a bicycle bell from another angle according to the present invention in the built-on state;
Fig. 5 is a schematic drawing showing an application of a bicycle bell mounted on a handlebar of a bicycle according to the present invention;
Fig. 6 is a schematic drawing showing the pressing on the striking element according to the present invention;
Fig. 7 is a schematic drawing showing the striking of the striking element after releasing the striking element; and
Fig. 8 is a schematic drawing of another embodiment of a bicycle bell according to the present invention.

### DETAILED DESCRIPTION OF THE PREFERRED EMBODIMENT

In order to learn features and functions of the present invention, please refer to the following embodiments and the figures.

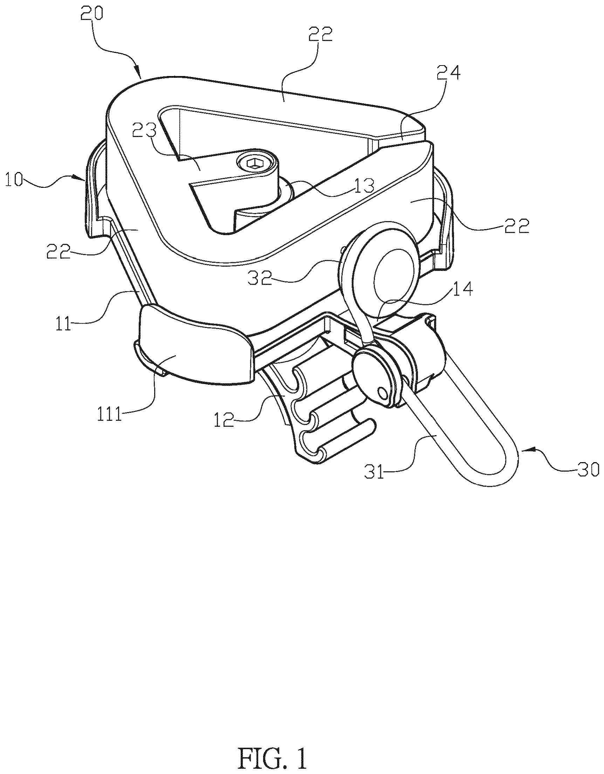

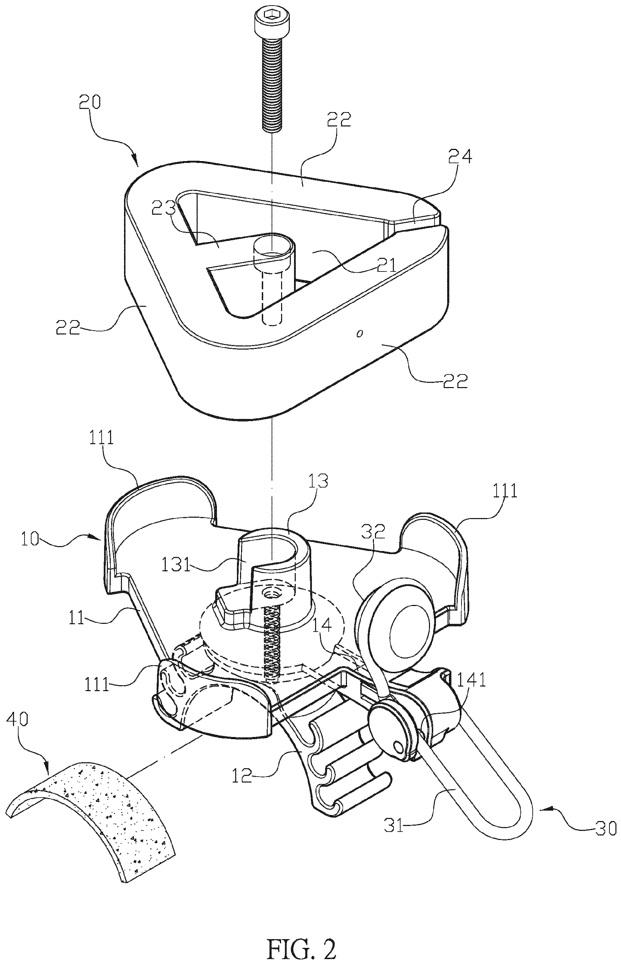

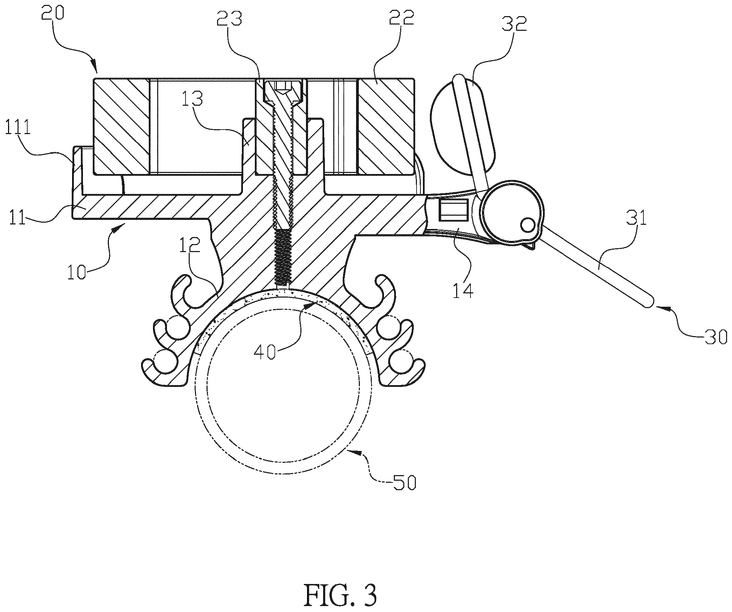

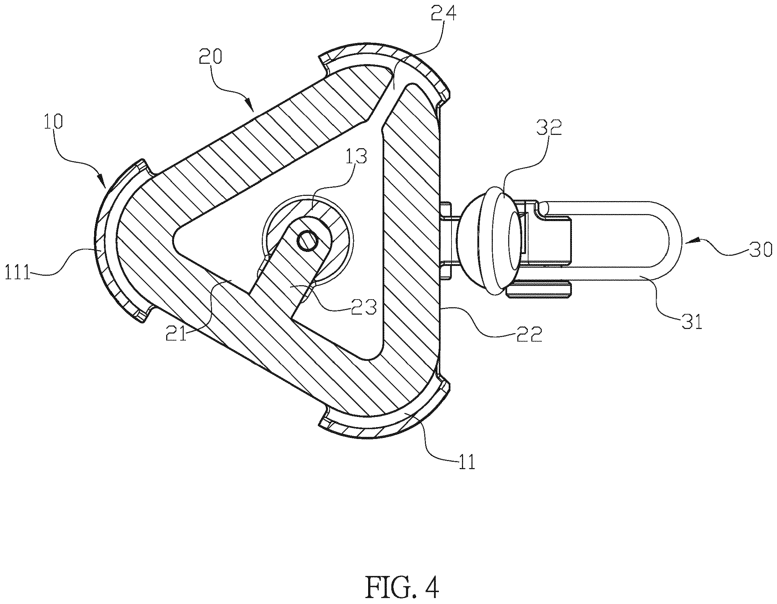

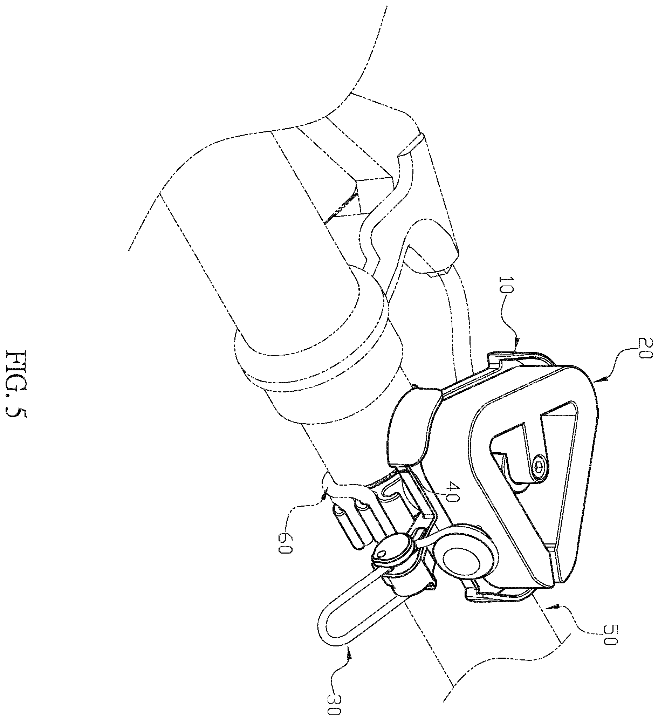

Refer to Fig. 1 to Fig. 5, a bicycle bell according to the present invention consists of a fixing element 10, a struck block 20 and a striking element 30. The fixing element 10 is provided with a base 11 on whose bottom side a connecting portion 12 is arranged, so that the fixing element 10 can be easily mounted on a handlebar 50 of a bicycle by means of the connecting portion 12. A positioning column 13 which is protruding from the center of the top side of the base 10 is arranged to elevate the struck block 20, whereas the struck block 20 can be connected to the positioning column 13. Furthermore, an extending seat 14 is formed on one side of the base 10, so that the striking element 30 which is elastic and resettable can be mounted on the extending seat 14. The struck block 20 is made of metal and formed as a triangular body having a hollow space 21 inwardly. The struck block 20 is provided with three struck segments 22 surrounding the outer side of the hollow space 21 and connected with each other in such a way that the respective connecting part is formed as a turn. A cantilever 23 is extending from at least one of the struck segments 22 into the hollow space 21 in such a way that the struck block 20 is mounted on the positioning column 13 of the fixing element 10 by the cantilever 23. An opening 24 is arranged on one side of the struck block 20 in such a manner that the opening 24 goes through the said struck segment 22.

According to the invention, the base 11 is triangular shaped and a baffle protruding upwards is arranged on the respective turn of the struck block 20. Thus, the struck block 20 can be protected against shocks by the baffles 111.

According to the invention, the connecting portion 12 is a ring-shaped body opened downwards. Several barbed hooks are arranged in turn on two sides of the upper curved surface of the ring-shaped body. To mount the bicycle bell, an elastic clamp 60 is engaged into the connecting portion 12 by means of two barbed hooks of proper height. Subsequently, the elastic clamp 60 und the connecting portion 12 are clamped securely on the handlebar 50 of the bicycle.

According to the invention, the positioning column 13 is a stepped shaft whose lower portion is proportionally bigger and whose upper portion is proportionally smaller formed. A notch 131 is formed on a side of the small-diameter section of the stepped shaft. After sidestepping, the cantilever 23 of the struck block 20 can extend to the notch 131. Furthermore, the big-diameter section of the stepped shaft is brought to abut against the lower edge of the cantilever 23 in such a way that the struck block 20 can be elevated on the fixing element 10 moderately.

According to the invention, the positioning column 13 and the cantilever 23 are connected with each other by screwing.

According to the invention, the extending seat 14 and the striking element 30 are exactly aligned with the middle of one of the struck segments 22 of the struck block 20.

According to the invention, at least one anti-slip pad 40 is clamped between the fixing element 10 and the handlebar 50 of the bicycle.

According to the invention, the opening 24 is arranged at a turn on which two of the struck segments 22 are connected with each other.

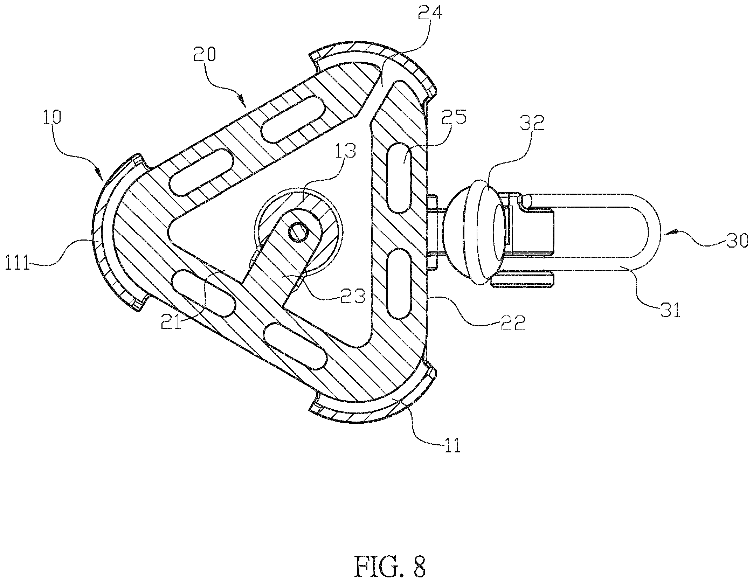

According to another embodiment of the invention, a plurality of cavities 25 is arranged on the struck block 20 for the purposes of decoration and weight reduction (also see Fig. 8).

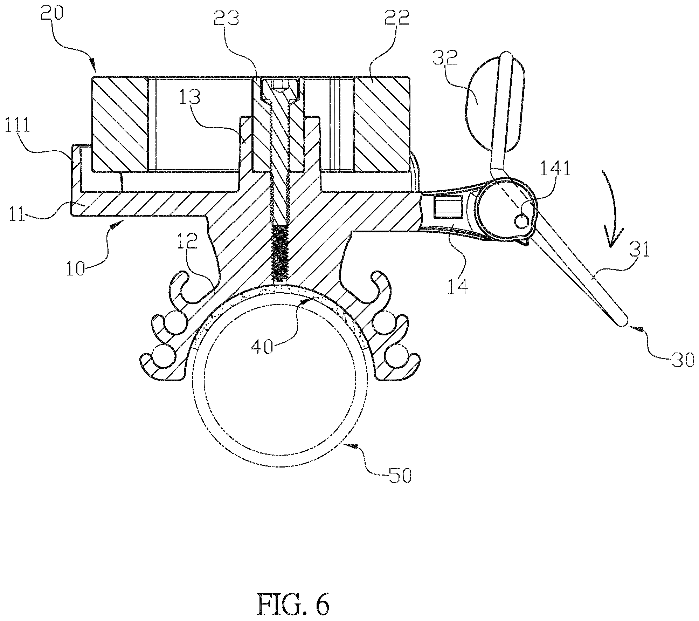

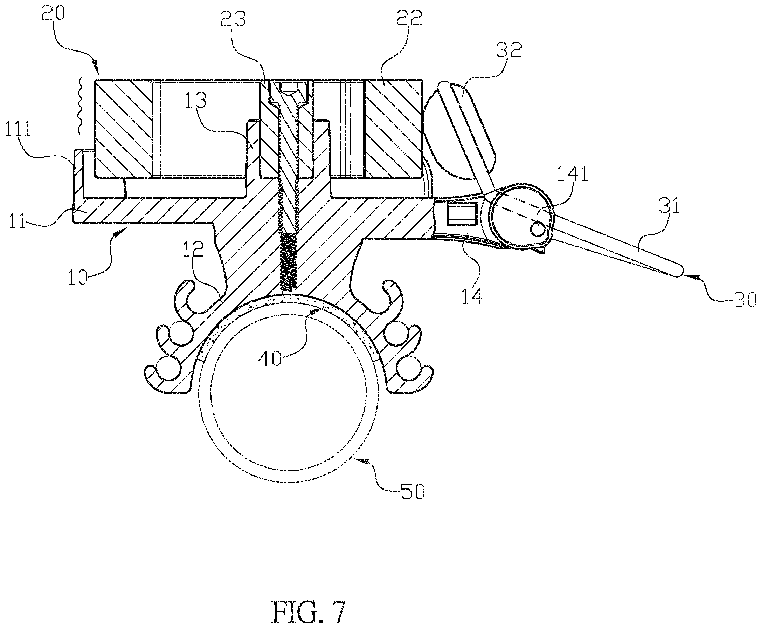

According to the invention, the striking element 30 comprises a bracket 31 composed of two supporting bars parallel formed in a mutually spaced manner. One of the supporting bars is connected to the extending seat 14, while a clapper 32 is mounted on the other supporting bar which abuts against a supporting shaft 141 passing through the extending seat 14. The abutting of the supporting shaft 141 enables the two supporting bars to be staggered, when the bracket 31 is pressed down. Meanwhile, an accumulation and storage of elastic force for active resetting will be achieved at the same time (also see Fig. 6). By releasing the hand that presses the bracket 31, the striking element 30 will spring back immediately and the clapper 32 will strike one of the struck segments 22 of the struck block 20 (also see Fig. 7). Thus the bicycle bell produces a clear, melodious and loud sound for warning pedestrians and other cyclists.

To use the bicycle bell, the user presses the striking element 30 in such a way that the striking element 30 is exposed to the effect of the elastic resetting force. Thus the clapper 32 on the striking element 30 strikes one of the struck segments 22 of the struck block 20 to produce a warning sound. By striking, the struck block 20 can produce a continuous resonance like a triangle owing to a proper separation of the struck block 20 from the base 11. The continuous resonance makes for clearer and louder sounds and enables a sound transmission in a broader area.

Additional advantages and modifications will readily occur to those skilled in the art. Therefore, the invention in its broader aspects is not limited to the specific details, and representative devices shown and described herein. Accordingly, various modifications may be made without departing from the scope of the general inventive concept as defined by the appended claims.

## Claims

1. A bicycle bell consisting of a fixing element (10), a struck block (20) and a striking element (30), wherein the fixing element (10) is provided with a base (10, 11) on whose bottom side a connecting portion (12) is arranged, so that the fixing element (10) can be easily mounted on a handlebar (50) of a bicycle by means of the connecting portion (12), whereas a positioning column (13) which is protruding from the center of the top side of the base (10, 11) is arranged to elevate the struck block (20) and the struck block (20) can be connected to the positioning column (13), whereas an extending seat (14) is formed on one side of the base (10, 11), so that the striking element (30) which is elastic and resettable can be mounted on the extending seat (14); the struck block (20) is made of metal and
**characterised in that** the struck block (20) is formed as a triangular body having a hollow space (21) inwardly; the struck block (20) is provided with three struck segments (22) surrounding the outer side of the hollow space (21) and connected with each other in such a manner that the respective connecting part is formed as a turn; a cantilever (23) is extending from at least one of the struck segments (22) into the hollow space (21) in such a way that the struck block (20) is mounted on the positioning column (13) of the fixing element (10) by the cantilever (23); an opening (24) is arranged on one side of the struck block (20) in such a manner that the opening (24) goes through the said struck segment (22).

2. The bicycle bell as claimed in claim 1, wherein the base (10, 11) is triangular shaped and a baffle protruding upwards is arranged on the respective turn of the struck block (20).

3. The bicycle bell as claimed in claim 1, wherein the connecting portion (12) is a ring-shaped body opened downwards and several barbed hooks are arranged in turn on two sides of the upper curved surface of the ring-shaped body, whereas. an elastic clamp (60) is engaged into the connecting portion (12) by means of two barbed hooks of proper height and the elastic clamp (60) and the connecting portion (12) are subsequently clamped securely on the handlebar (50) of the bicycle to mount the bicycle bell.

4. The bicycle bell as claimed in claim 1, wherein the positioning column (13) is a stepped shaft whose lower portion is proportionally bigger and whose upper portion is proportionally smaller formed, whereas a notch (131) is formed on a side of the small-diameter section of the stepped shaft and the cantilever (23) of the struck block (20) can extend to the notch (131) after sidestepping; furthermore, the big-diameter section of the stepped shaft is brought to abut against the lower edge of the cantilever (23) in such a way that the struck block (20) can be elevated on the fixing element (10) moderately.

5. The bicycle bell as claimed in claim 1 or 4, wherein the positioning column (13) and the cantilever (23) are connected with each other by screwing.

6. The bicycle bell as claimed in claim 1, wherein the extending seat (14) and the striking element (30) are exactly aligned with the middle of one of the struck segments (22) of the struck block (20).

7. The bicycle bell as claimed in claim 1, wherein at least one anti-slip pad 40 is clamped between the fixing element (10) and the handlebar (50) of the bicycle.

## Patentansprüche

1. Fahrradklingel, die aus einem Befestigungselement (10), einem Schlagblock (20) und einem Schlagelement (30) besteht, bei der das Befestigungselement (10) mit einer Basis (11) versehen ist, an deren Unterseite ein Verbindungsabschnitt (12) angeordnet ist, so dass das Befestigungselement (10) mittels des Verbindungsabschnitts (12) leicht an einer Lenkstange (50) eines Fahrrads angebracht werden kann, während eine Positionierungssäule (13), die von der Mitte der Oberseite der Basis (11) vorsteht, angeordnet ist, um den Schlagblock (20) anzuheben, und der Schlagblock (20) kann mit der Positionierungssäule (13) verbunden werden, während ein verlängerter Sitz (14) an einer Seite der Basis (11) ausgebildet ist, so dass das Schlagelement (30), welches elastisch und rückstellbar ist, an dem verlängerten Sitz (14) angebracht werden kann,
wobei der Schlagblock (20) aus Metall gefertigt ist, und
**dadurch gekennzeichnet, dass** der Schlagblock (20) als dreieckiger Körper mit einem Hohlraum (21) im Inneren ausgebildet ist, wobei der Schlagblock (20) mit drei Schlagsegmenten (22) versehen ist, welche die Außenseite des Hohlraums (21) umgeben und so miteinander verbunden sind, dass ein jeweiliges Verbindungsteil als gekrümmte Ecke ausgebildet ist, wobei ein Ausleger (23) von mindestens einem der Schlagsegmente (22) in den Hohlraum (21) hineinragt, so dass der Schlagblock (20) durch den Ausleger (23) an der Positionierungssäule (13) des Befestigungselements (10) angebracht ist, wobei eine Öffnung (24) an einer Seite des Schlagblocks (20) so angeordnet ist, dass die Öffnung (24) durch das Schlagsegment hindurchgeht.

2. Fahrradklingel nach Anspruch 1, bei welcher die Basis (11) dreieckig geformt ist, wobei eine nach oben ragende Schallwand (111) an den jeweiligen gekrümmten Ecken des Schlagblocks (20) angeordnet ist.

3. Fahrradklingel nach Anspruch 1, bei welcher der Verbindungsabschnitt (12) ein ringförmiger Körper ist, welcher nach unten geöffnet ist, wobei mehrere Widerhaken abwechselnd an zwei Seiten der oberen gewölbten Fläche des ringförmigen Körpers angeordnet sind, während ein elastischer Bügel (60) mit dem Verbindungsabschnitt (12) mittels zweier Widerhaken geeigneter Höhe im Eingriff ist und wobei der elastische Bügel (60) und der Verbindungsabschnitt (12) anschließend zur Montage der Fahrradklingel fest am Lenker (50) des Fahrrads geklemmt werden.

4. Fahrradklingel nach Anspruch 1, bei welcher die Positionierungssäule (13) eine abgesetzter Schaft ist, dessen unterer Teil proportional größer und dessen oberer Teil proportional kleiner ausgebildet ist, wobei an einer Seite des Abschnitts mit kleinem Durchmesser des abgesetzten Schafts eine Kerbe (131) ausgebildet ist und der Ausleger (23) des Schlagblockes (20) kann nach der Absetzung bis zur Kerbe (131) reichen, wobei ferner der Abschnitt mit großem Durchmesser des abgesetzten Schafts so zur Anlage an die Unterkante des Auslegers (23) angebracht ist, dass der Schlagblock (20) auf dem Befestigungselement (10) moderat angehoben werden kann.

5. Fahrradklingel nach Anspruch 1 oder 4, bei welcher die Positionierungssäule (13) und der Ausleger (23) durch Verschraubung miteinander verbunden sind.

6. Fahrradklingel nach Anspruch 1, bei welcher der verlängerte Sitz (14) und das Schlagelement (30) genau auf die Mitte eines der Schlagsegmente (22) des Schlagblocks (20) ausgerichtet sind.

7. Fahrradklingel nach Anspruch 1, bei welcher zwischen dem Befestigungselement (10) und dem Lenker des Fahrrads mindestens ein Anti-Rutsch-Unterlage (40) eingespannt ist.

## Revendications

1. Sonnette de bicyclette consistant en un élément de fixation (10), un bloc frappé (20) et un élément de frappe (30), dans laquelle l'élément de fixation (10) est doté d'une base (10, 11) sur le côté bas de laquelle une partie de liaison (12) est agencée, de sorte que l'élément de fixation (10) puisse être facilement monté sur un guidon (50) d'une bicyclette au moyen de la partie de liaison (12), tandis qu'une colonne de positionnement (13) qui fait saillie depuis le centre du côté haut de la base (10, 11) est agencée pour élever le bloc frappé (20) et le bloc frappé (20) peut être relié à la colonne de positionnement (13), tandis qu'un siège d'extension (14) est formé sur un côté de la base (10, 11), de sorte que l'élément de frappe (30) qui est élastique et réenclenchable puisse être monté sur le siège d'extension (14); le bloc frappé (20) est fait de métal et **caractérisée en ce que** le bloc frappé (20) est formé comme un corps triangulaire présentant un espace creux (21) vers l'intérieur; le bloc frappé (20) est doté de trois segments frappés (22) entourant le côté extérieur de l'espace creux (21) et reliés les uns aux autres de telle manière que la partie de liaison respective est formée comme un virage; un cantilever (23) s'étend à partir d'au moins un des segments frappés (22) dans l'espace creux (21) de telle façon que le bloc frappé (20) est monté sur la colonne de positionnement (13) de l'élément de fixation (10) par le cantilever (23); une ouverture (24) est agencée sur un côté du bloc frappé (20) de telle manière que l'ouverture (24) passe à travers ledit segment frappé (22).

2. Sonnette de bicyclette selon la revendication 1, dans laquelle la base (10, 11) est de forme triangulaire et un déflecteur faisant saillie vers le haut est agencé sur le virage respectif du bloc frappé (20).

3. Sonnette de bicyclette selon la revendication 1, dans laquelle la partie de liaison (12) est un corps en forme d'anneau ouvert vers le bas et plusieurs crochets à barbules sont agencés à leur tour sur deux côtés de la surface incurvée supérieure du corps en forme d'anneau, tandis qu'une attache élastique (60) est mise en prise dans la partie de liaison (12) au moyen de deux crochets à barbules d'une hauteur convenable et l'attache élastique (60) et la partie de liaison (12) sont par la suite attachées solidement sur le guidon (50) de la bicyclette pour monter la sonnette de bicyclette.

4. Sonnette de bicyclette selon la revendication 1, dans laquelle la colonne de positionnement (13) est une tige étagée dont la partie inférieure est proportionnellement plus grande et dont la partie supérieure est proportionnellement formée plus petite, tandis qu'une encoche (131) est formée sur un côté de la section de petit diamètre de la tige étagée et le cantilever (23) du bloc frappé (20) peut s'étendre vers l'encoche (131) après une montée en escalier; de plus, la section de grand diamètre de la tige étagée est amenée à buter contre le bord inférieur du cantilever (23) de telle façon que le bloc frappé (20) peut être élevé sur l'élément de fixation (10) de manière modérée.

5. Sonnette de bicyclette selon la revendication 1 ou 4, dans laquelle la colonne de positionnement (13) et le cantilever (23) sont reliés l'un à l'autre par vissage.

6. Sonnette de bicyclette selon la revendication 1, dans laquelle le siège d'extension (14) et l'élément de frappe (30) sont alignés exactement sur le milieu d'un des segments frappés (22) du bloc frappé (20).

7. Sonnette de bicyclette selon la revendication 1, dans laquelle au moins un tampon antidérapant (40) est attaché entre l'élément de fixation (10) et le guidon (50) de la bicyclette.
